# EUROPEAN PATENT APPLICATION

(11) **EP 4 210 366 A1**
(43) Date of publication of application: **12.07.2023**
(21) Application number: 21864277.5
(22) Date of filing: 30.08.2021
(51) Int. Cl.: H04W 8/20, H04W 24/10, H04B 7/024, H04B 7/0417, H04W 84/12

(54) **COMMUNICATION DEVICE, COMMUNICATION METHOD, AND PROGRAM**

(30) Priority: 02.09.2020 JP 2020147489
(71) Applicant: CANON KABUSHIKI KAISHA, Tokyo 146-8501 (JP)
(72) Inventor: YUKAWA, Mitsuyoshi, Tokyo 146-8501 (JP)
(74) Representative: Canon Europe Limited
(86) International application number: PCT/JP2021/031739
(87) International publication number: WO 2022/050219

(57) **Abstract**

A communication device 100 transmits a frame to be transmitted from the communication device 100 toward a plurality of communication networks 101 to 103 and to be transmitted so that the communication device 100 receives information on a channel state from a plurality of communication devices 107 and 108. The frame includes at least sets of AIDs of the respective plurality of communication devices 107 and 108 and pieces of identification information of communication networks to which the communication devices 107 and 108 belong, or at least sets of AIDs of the respective plurality of communication devices 107 and 108 and MAC addresses of the respective plurality of communication devices 107 and 108. The communication device 100 receives the channel state from the plurality of communication devices 107 and 108 that have received the transmitted frame.

## Description

### Technical Field

The present invention relates to a communication device that performs wireless communication.

### Background Art

There is an IEEE 802.11 standard series as main communication standards for wireless LAN (Local Area Network). IEEE stands for Institute of Electrical and Electronics Engineers. The IEEE 802.11 standard series includes, for example, IEEE 802.11a/b/g/n/ac/ax standards.

In IEEE 802.11ax described in PTL 1, a technique of improving a communication rate in a congestion situation is standardized in addition to high peak throughput. As a standard subsequent to the IEEE 802.11ax, an IEEE 802.11be standard (hereinafter referred to as 11be) is being developed.

In the 11be, a technique is being studied in which a plurality of APs (Access Points) operate in a coordinated manner and perform data communication with an STA (Station) to enable an improvement in throughput.

An example of coordinated operation of a plurality of APs is a distributed MIMO (Multi-Input Multi-Output) technique based on a MIMO technique in which a plurality of transmit and receive antennas are used in the same channel at the same time. In distributed MIMO, in an environment where there are a plurality of APs and a plurality of STAs, pieces of information on communication states and the status of each AP are shared among the plurality of APs, and data is transmitted from APs to STAs at the same timing. When the plurality of APs operate in a coordinated manner in this way, the number of spatial streams can be increased in comparison with a case where a single AP performs communication, and thus throughput is expected to be improved.

Such a communication technique in which a plurality of APs operate in a coordinated manner is called Multi-AP communication. APs are categorized into one master AP that manages other APs and a slave AP that operates under the control of the master AP.

### Citation List

### Patent Literature

PTL 1: Japanese Patent Laid-Open No. 2018-50133

### Summary of Invention

### Technical Problem

To implement the distributed MIMO, the master AP has to perform sounding for acquiring CSI indicating a channel state from an STA that is establishing a connection with the master AP and an STA that is not establishing a connection with the master AP but is establishing a connection with a slave AP. Here, CSI stands for Channel State Information. To acquire pieces of CSI from respective STAs, the master AP specifies, in accordance with an AID (Association ID), which is identification information of each STA, an STA that is to transmit CSI. However, an AID is identification information to be assigned in each communication network, and thus there is a possibility that the same AID is assigned to an STA allocated in a first communication network and an STA allocated in a second communication network. When AIDs are the same, a plurality of STAs for one AID respond to the master AP. Thus, appropriate sounding is not able to be performed, and no CSI may be able to be received from a desired STA.

Thus, the present invention aims to enable, when receiving channel states from a plurality of devices by using a frame transmitted toward a plurality of communication networks, a channel state to be received from an appropriate device.

### Solution to Problem

To achieve the above-described aim, a communication device according to an aspect of the present invention includes a transmission unit, and a reception unit. The transmission unit transmits a frame to be transmitted toward a plurality of communication networks and to be transmitted so that the communication device receives information on a channel state from a plurality of other communication devices, and the frame includes at least sets of AIDs (Association IDs) of the respective plurality of other communication devices that transmit the information on the channel state and pieces of identification information of communication networks to which the other communication devices belong, or at least sets of AIDs of the respective plurality of other communication devices that transmit the information on the channel state and MAC addresses of the respective plurality of other communication devices. The reception unit receives the channel state from the plurality of other communication devices that have received the frame transmitted by the transmission unit.

Furthermore, to achieve the above-described aim, a communication device according to an aspect of the present invention includes a first reception unit, and a transmission unit. The first reception unit receives a first frame being a frame to be transmitted from another communication device toward a plurality of communication networks and to be transmitted so that the other communication device receives information on a channel state from a plurality of devices, and the first frame includes at least sets of AIDs (Association IDs) of the respective plurality of devices that transmit the information on the channel state and pieces of identification information of communication networks to which the devices belong, or at least sets of AIDs of the respective plurality of other communication devices that transmit the information on the channel state and MAC addresses of the respective plurality of other devices.

The transmission unit transmits the information on the channel state to the other communication device in accordance with a set of an AID and the identification information included in the first frame received by the first reception unit, or a set of an AID and a MAC address included in the first frame.

### Advantageous Effects of Invention

The present invention enables, when receiving channel states from a plurality of devices by using a frame transmitted toward the plurality of communication networks, a channel state to be received from an appropriate device.

### Brief Description of Drawings

[Fig. 1] Fig. 1 illustrates a configuration of networks to which a communication device 100 belongs.
[Fig. 2] Fig. 2 illustrates a hardware configuration of communication devices 100, and 104 to 106.
[Fig. 3] Fig. 3 illustrates a frame format of an NDPA frame.
[Fig. 4] Fig. 4 illustrates a frame format of an NDPA frame.
[Fig. 5] Fig. 5 illustrates a frame format of a trigger frame.
[Fig. 6] Fig. 6 illustrates a frame format of a polling signal.
[Fig. 7] Fig. 7 is a flowchart illustrating a process performed by the communication device 100.
[Fig. 8] Fig. 8 is a flowchart illustrating a process performed by an STA.
[Fig. 9] Fig. 9 illustrates a sequence in which the communication device 100 acquires CSI from STAs. Description of Embodiments

An embodiment of the present invention will be described in detail below with reference to the accompanying drawings. Incidentally, configurations described in the following embodiment are merely examples, and the present invention is not limited to illustrated configurations.

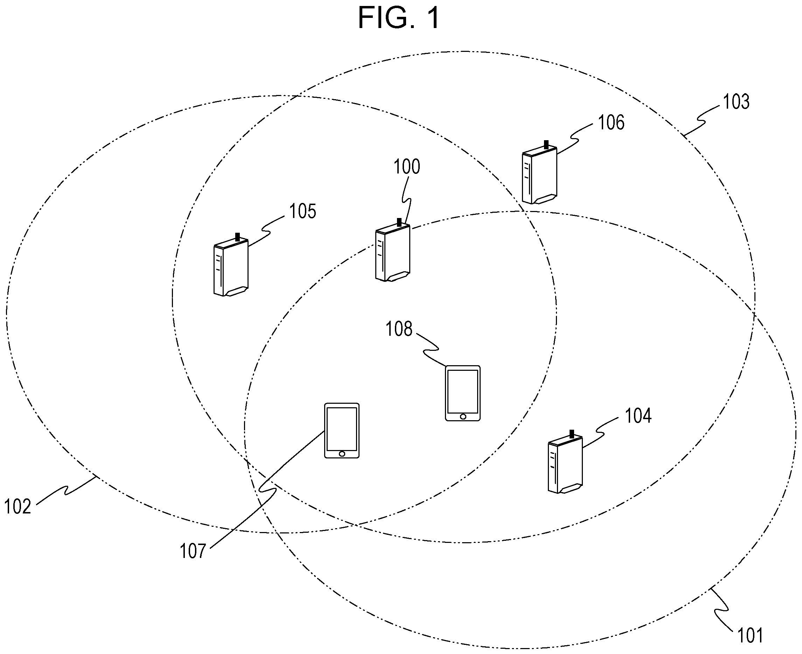

Fig. 1 illustrates a configuration of communication networks constructed by a communication device 100 according to the present embodiment. A communication device 104 is an Access Point (hereinafter referred to as an AP) that plays a role in constructing a wireless communication network 101. Furthermore, a communication device 105 is an AP that plays a role in constructing a wireless communication network 102, and a communication device 106 is an AP that plays a role in constructing a wireless communication network 103. A communication device 107 and a communication device 108 are Stations (hereinafter referred to as STAs) that play roles in participating in the wireless communication networks 101, 102, and 103. In the present embodiment, the communication device 100 functions as a master AP that manages other APs, and the communication devices 104 to 106 are slave APs that operate under the control of the master AP.

The communication devices 100, and 104 to 108 can perform wireless communication complying with an IEEE 802.11be standard. Incidentally, IEEE stands for Institute of Electrical and Electronics Engineers. The communication devices 100, and 104 to 108 can perform communication in frequency bands of a 2.4 GHz band, a 5 GHz band, and a 6 GHz band. Furthermore, the communication devices 100, and 104 to 108 can perform communication by using bandwidths of 20 MHz, 40 MHz, 80 MHz, 160 MHz, and 320 MHz.

The communication devices 100, and 104 to 108 form one group as AP devices that perform Multi-AP communication. As a master AP, the communication device 100 possesses pieces of information on the respective communication devices 104 to 108. Included among the pieces of information possessed by the communication device 100 are pieces of information identifying STAs with which the communication devices 104 to 108 are establishing a connection. Furthermore, each of the communication devices 104 to 108 recognizes the communication device 100 as the master AP. Each of the communication devices 104 to 108 may recognize communication devices other than itself as slave APs.

Here, a master AP may be called a sharing AP, and a slave AP may be called a shared AP.

The communication devices 100, and 104 to 108 perform OFDMA communication complying with the IEEE 802.11be standard, thus making it possible to implement Multi User (MU) communication in which signals of a plurality of users are multiplexed. OFDMA stands for Orthogonal Frequency Division Multiple Access. In the OFDMA communication, RUs (Resource Units), which are some of sub-frequency bands into which a frequency band is divided, are allocated to STAs such that the same RU is not allocated to each STA, and carrier waves of the respective STAs are orthogonal to each other. Consequently, an AP can communicate with a plurality of STAs at the same time.

Incidentally, the communication devices 100, and 104 to 108 are compliant with the IEEE 802.11be standard and may be compliant with, in addition to this, a legacy standard that is a standard prior to the IEEE 802.11be standard. Specifically, the communication devices 100, and 104 to 108 may be compliant with at least any one of IEEE 802.11a/b/g/n/ac/ax standards and subsequent standards. Furthermore, the communication devices 100, and 104 to 108 may be compliant with, in addition to IEEE 802.11 series standards, other communication standards, such as Bluetooth (registered trademark), NFC, UWB, ZigBee, and MBOA. Incidentally, UWB stands for Ultra Wide Band, and MBOA stands for Multi Band OFDM Alliance. Furthermore, NFC stands for Near Field Communication. The UWB includes, for example, wireless USB, wireless 1394, and WiNET. Furthermore, the communication devices 100, and 104 to 108 may be compliant with a communication standard of wired communication, such as wired LAN communication.

Although specific examples of the communication devices 100, and 104 to 106 include a wireless LAN router, and a personal computer (PC), the communication devices 100, and 104 to 106 are not limited to these. Furthermore, the communication devices 104 to 106 may be information processing devices, such as a wireless chip, that can perform wireless communication complying with the IEEE 802.11be standard. Additionally, although specific examples of the communication devices 107 to 108 include a camera, a tablet, a smartphone, a PC, a mobile phone, and a video camera, the communication devices 107 to 108 are not limited to these. Furthermore, the communication devices 107 to 108 may be information processing devices, such as a wireless chip, that can perform wireless communication complying with the IEEE 802.11be standard. In addition, although the wireless networks in Fig. 1 are constituted by three APs and two STAs, the numbers of APs and STAs are not limited to these.

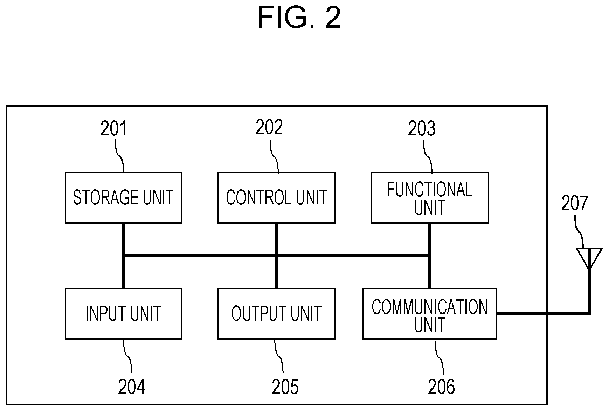

Fig. 2 illustrates a hardware configuration of the communication devices 100, and 104 to 106 according to the present embodiment. The communication device 100 includes a storage unit 201, a control unit 202, a functional unit 203, an input unit 204, an output unit 205, a communication unit 206, and an antenna 207. Incidentally, the communication devices 104 to 106 also have a hardware configuration similar to that of the communication device 100.

The storage unit 201 is constituted by a memory, such as a ROM or RAM, and stores a computer program for performing various operations to be described, and various pieces of information, such as communication parameters for wireless communication. ROM stands for Read Only Memory, and R_AM stands for Random Access Memory. Incidentally, as the storage unit 201, a storage medium, such as a flexible disk, hard disk, optical disc, magneto-optical disk, CD-ROM, CD-R, magnetic tape, non-volatile memory card, or DVD, may be used in addition to a memory, such as a ROM or RAM. Furthermore, the storage unit 201 may include a plurality of memories, for example.

The control unit 202 is constituted, for example, by one or more processors, such as a CPU or MPU, and controls the entire communication device 104 by executing the computer program stored in the storage unit 201. CPU stands for Central Processing Unit, and MPU stands for Micro Processing Unit. Incidentally, the control unit 202 may control the entire communication device 100 by causing the computer program stored in the storage unit 201 and an OS (Operating System) to operate in cooperation with each other. Furthermore, the control unit 202 generates data or a signal to be transmitted in communicating with another communication device. Additionally, the control unit 202 may include a plurality of processors, such as multiple cores, to control the entire communication device 104 by using the plurality of processors.

Furthermore, the control unit 202 controls the functional unit 203 to perform predetermined processes, such as wireless communication, image capturing, printing, and projection. The functional unit 203 is hardware for the communication device 100 performing a predetermined process.

The input unit 204 receives various operations from a user. The output unit 205 provides various outputs to the user through a monitor screen and/or a speaker. Here, examples of an output provided by the output unit 205 may include a display onto the monitor screen, a voice output via the speaker, and a vibration output. Incidentally, both the input unit 204 and the output unit 205 may be implemented by one module like a touch panel. Furthermore, each of the input unit 204 and the output unit 205 may be integrated into the communication device 104 or may be an element separate from the communication device 104.

The communication unit 206 controls wireless communication complying with the IEEE 802.11be standard. Furthermore, the communication unit 206 may control wireless communication complying with other IEEE 802.11 series standards in addition to the IEEE 802.11be standard, or may control wired communication, such as wired LAN communication. The communication unit 206 controls the antenna 207 to transmit and/or receive radio signals for wireless communication generated by the control unit 202.

Incidentally, if the communication device 100 is compliant, for example, with an NFC standard and a Bluetooth standard in addition to the IEEE 802.11be standard, wireless communication complying with these communication standards may be controlled. Furthermore, if the communication device 100 can perform wireless communication complying with a plurality of communication standards, the communication device 100 may include individual communication units 206 and individual antennas 207 corresponding to the respective communication standards. The communication device 100 communicates data, such as image data, document data, and video data, to the communication devices 107 and 108 via the communication unit 206.

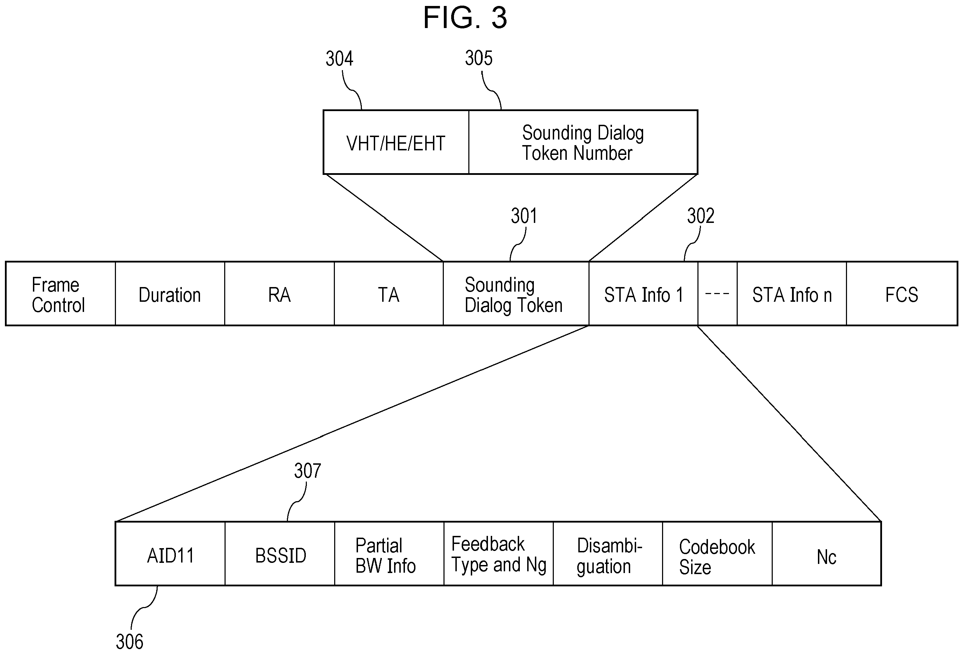

Fig. 3 illustrates an example of a format of an NDPA frame in the present embodiment. The NDPA frame in the present embodiment is transmitted in order for an AP that transmits this frame to notify an AP or STA existing around itself that an NDP frame is to be transmitted. Here, NDPA stands for Null Data Packet Announcement, and the NDPA frame is a frame complying with an IEEE 802.11 series standard. Furthermore, NDP stands for Null Data Packet, and the NDP frame is a frame complying with an IEEE 802.11 series standard.

In a Sounding Dialog Token 301 field, the first 2-bit field is a VHT/HE/EHT 304 field representing a supported standard. When the VHT/HE/EHT 304 field is 10, it means that the NDPA frame is an EHT NDPA frame complying with the IEEE 802.11be standard.

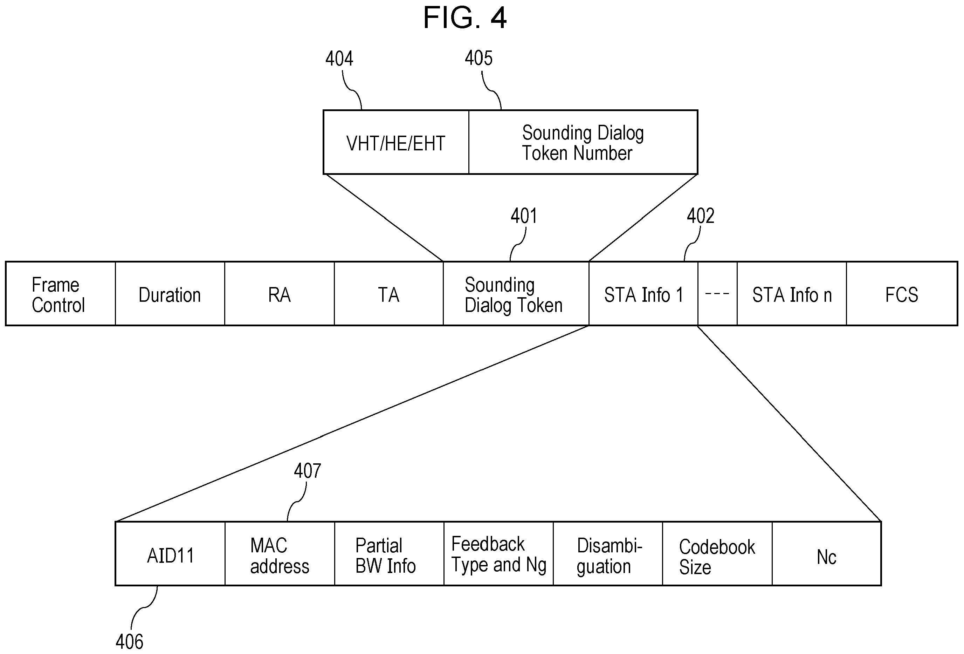

In the NDPA frame, information on an STA that is a place (destination) to which the NDPA frame is transmitted is included in an STA Info 302 field. Thus, the same number of STA Info 302 fields as the number of STAs that are destinations of the NDPA frame are included. In an STA info field, an AID 306 field and a BSSID 307 field are included. In the AID 306 field, identification information assigned when a connection between an AP and an STA is established is included. In the BSSID 307 field, identification information of a communication network constructed by the AP that is establishing a connection with the STA concerned is included. Here, AID stands for Association ID, and BSSID stands for Basic Service Set ID. The AID 306 field is indicated by 11 bits. Here, when an AID assigned when a connection is established is stored in the AID 306 field, the low order 11 bits of the AID are stored. Thus, in Figs. 3 and 4, a subfield is specified as an AID11 subfield. An AID is identification information to be assigned in each communication network, and thus there is a possibility that the same AID is assigned to an STA allocated in a first BSS and an STA allocated in a second BSS. However, when, in addition to the AID, BSSID information, which is identification information of a network, is included in the NDPA frame, it can be indicated that the NDPA frame is an NDPA frame to be transmitted to a specific STA. An STA that has received an NDPA frame transmits CSI to the target AP when an AID of its own device and a BSSID of a network in which its own device participates match an AID 306 field and a BSSID 307 field that are included in one of STA Info fields. Here, CSI stands for Channel State Information and refers to information representing characteristics of a transmission line between the AP and the STA. Only an STA whose AID and BSSID match the respective fields transmits CSI to the AP, and thus there is no possibility that the AP acquires CSI from a plurality of STAs. An AID and a BSSID are shared, for example, when information is exchanged between APs as a process performed prior to Multi-AP communication.

Fig. 4 illustrates an example of a format of an NDPA frame in the present embodiment. A VHT/HE/EHT field 401 to an AID 406 in Fig. 4 are similar to 301 to 306 in Fig. 3. In an STA Info 402 field in the NDPA frame illustrated in Fig. 4, a MAC address 407 is included. Incidentally, if a MAC address is included in the STA Info in this frame, no AID has to be included. The master AP recognizes, in advance, a MAC address of an AP or STA that is a destination to which the master AP transmits an NDPA frame and thus can include the MAC address in a MAC address 407 field in the NDPA frame. An AP or STA that has received an NDPA frame transmits a CSI report to a target AP after receiving a trigger frame when a MAC address of its own device matches a MAC address 407 field in one of STA info 402 fields. A MAC address is information unique to a communication device but can be changed by the user.

For this reason, when an AID and a MAC address are combined, an AP or STA that has received an NDPA frame can determine that the NDPA frame is certainly an NDPA frame addressed to its own device.

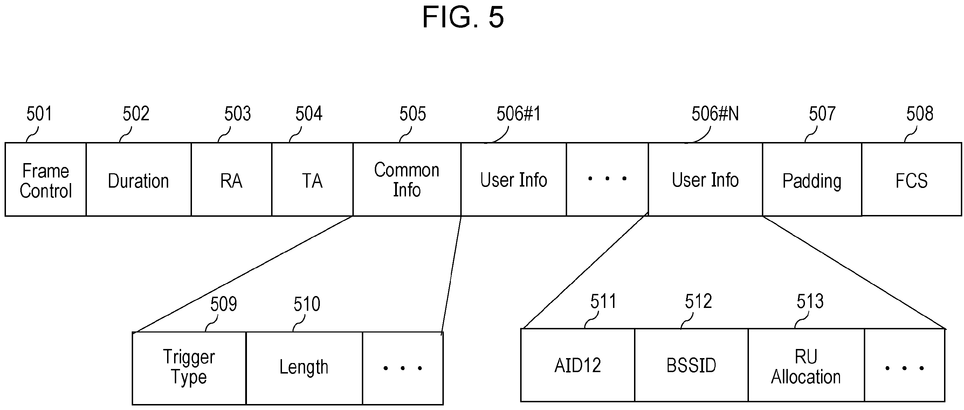

Fig. 5 illustrates an example of a format of a trigger frame in the present embodiment. The trigger frame in the present embodiment provides an instruction to transmit CSI estimated by an STA from an NDP frame. Fields/subfields denoted by 501 to 508 in Fig. 5 comply with a format specified in the IEEE 802.11ax. Trigger Type 509 in a Common Info 505 field specifies the type of a trigger handled by this trigger frame. Furthermore, Length 510 represents a common communication period of all the communication devices.

Table 1 illustrates associations between Trigger Type subfield values and the types of triggers in Trigger Type 509.

**[Table 1]**

| SUBFIELD VALUE | TYPE OF TRIGGER |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Multi-AP CSI report trigger |
| 9-15 | reserved |

Trigger Type 509 is indicated by four bits. In the present embodiment, when a Trigger Type subfield value is 8, an instruction to transmit, to an AP that has transmitted an NDP frame, CSI estimated by an STA from the NDP frame is provided.

In User Info 506#1 to 506#N fields, an AID (Association ID) 511, which is an identifier, a BSSID (Basic Service Set ID) 512, RU Allocation 513, and so forth are included. The AID 511 is indicated by 12 bits. Here, when an AID, which is identification information assigned when a connection is established, is stored in the AID 511, the low order 12 bits of the AID are stored. Thus, in Fig. 5, a subfield is specified as an AID12 subfield in the AID 511. In the BSSID 512, identification information of a communication network constructed by an AP that is establishing a connection with an STA concerned is included. In place of a BSSID 512 field, a MAC address field may be used.

In a User Info 506 field, information on an STA that is a destination for the AP that transmits a trigger frame is included. Thus, the same number of User Info 506 fields as the number of STAs to which an instruction to transmit CSI estimated by an STA to the communication device 100 is provided are included.

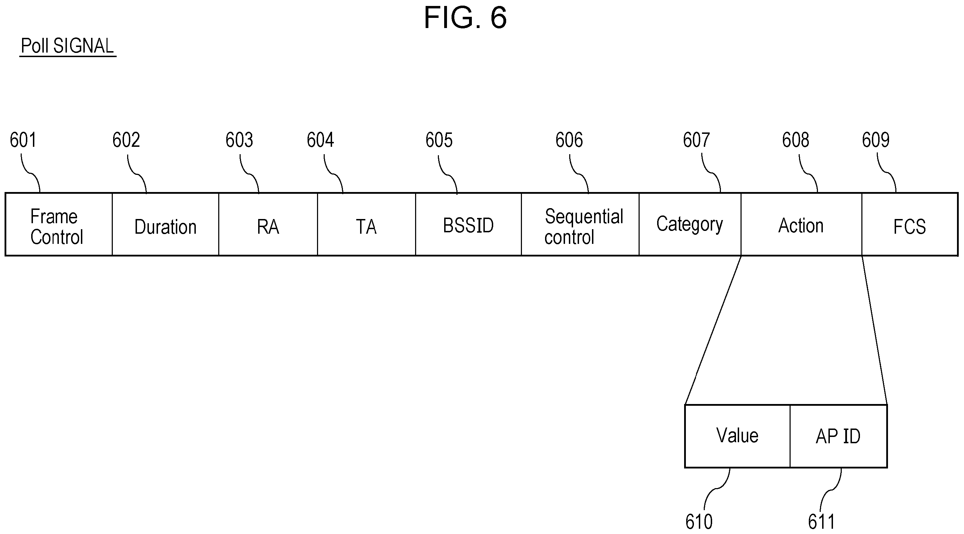

Fig. 6 illustrates an example of a frame format of a polling signal in the present embodiment. Fields/subfields denoted by 601 to 609 comply with a format specified in the IEEE 802.11ax. When a value of a Category 607 field is 32, it is indicated that a frame is an EHT action frame. Furthermore, when a Value 610 field is 0, it is represented that a polling signal is the polling signal in the present embodiment. The polling signal in the present embodiment is a signal for changing an AP that transmits an NDP frame and receives CSI. Furthermore, in an AP ID 611 field, an ID of a slave AP that transmits the polling signal to the master AP or to which the polling signal is transmitted from the master AP is included.

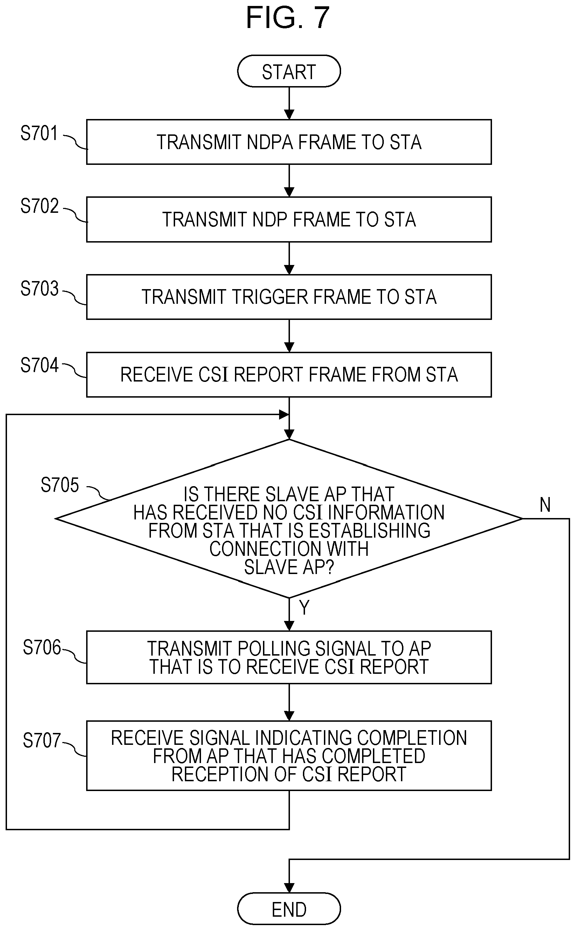

Fig. 7 is a flowchart illustrating the flow of a process performed by the control unit 202 executing a program stored in the storage unit 201 of the communication device 100, which is the master AP.

When a start frame is transmitted in response to the fact that an instruction to start Multi-AP communication has been provided from the user or an application, or the fact that the amount of data that the communication device 100 wants to communicate to a destination device has reached or exceeded a predetermined threshold value, the flowchart starts. The communication device 104 that has received the start frame temporarily stops data exchange with an STA that is establishing a connection with the communication device 104. In S701, an NDPA frame, which is a notification frame notifying that an NDP frame is to be transmitted, is transmitted to an STA. In the NDPA frame, in addition to an AID, a BSSID or MAC address is included.

In S702, the communication device 100 transmits the NDP frame to the STA. The NPD frame is a frame used by the STA to estimate CSI. In S703, the communication device 100 transmits a command frame that provides an instruction to transmit the CSI estimated from information on the NDP frame. Next, in S704, the CSI estimated by the STA is received. Next, in S705, a determination is made as to whether there is a slave AP that has received no CSI from an STA that is establishing a connection with the slave AP. When it is determined in S705 that there is a slave AP that has received no CSI report frame, the communication device 100 transmits, in S706, a polling signal to the slave AP for which it has been determined in S705 that no CSI report frame has been received. When the communication device 100 transmits the polling signal, a transmission right to transmit an NDPA frame is given to the slave AP. In S707, a polling signal indicating completion is received from the AP that has completed reception of a CSI report. In S705, when there is not a slave AP that has received no CSI from an STA that is establishing a connection with the slave AP, the process ends.

An NDPA frame to be transmitted after a start frame is transmitted may be transmitted not only to an STA but also to a slave AP. In a case where CSI of the slave AP is acquired, the master AP transmits the NDPA frame to the slave AP as well. Furthermore, when the slave AP receives CSI acquired by the master AP from the STA, the slave AP can acquire the CSI.

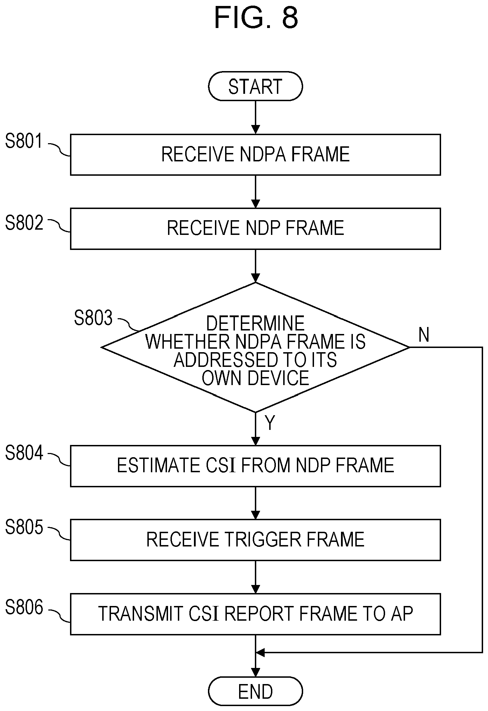

Fig. 8 is a flowchart illustrating the flow of a process performed by a control unit 202 executing a program stored in a storage unit 201 of a communication device that is an STA.

When a start frame is received, the flowchart starts. The start frame is a frame transmitted by the communication device 100 in response to the fact that an instruction to start Multi-AP communication has been provided from the user or an application, or the fact that the amount of data that the communication device 100 wants to communicate has reached or exceeded a predetermined threshold value.

In S801, an NDPA frame transmitted by the communication device 100, which is the master AP, is received. In the NDPA frame, in addition to an AID assigned to an STA when a connection is established, a BSSID, which is identification information of a network, or a MAC address is included. Next, in S802, an NDP frame is received. In the NDP frame, transmission power information of the NDP frame is included, and the STA estimates CSI by comparing reception strength of the NDP frame received by the STA with the transmission power information. In S803, a determination is made as to whether the NDPA frame is a frame addressed to the STA's own device. A determination as to whether the NDPA frame is addressed to the STA's own device is made in accordance with whether the AID and the BSSID or MAC address that are stored in the NDPA frame match an AID of the STA's own device and a BSSID or MAC address of the STA's own device. When it is determined in S803 that the NDPA frame is an NDPA frame addressed to the STA's own device, CSI is estimated in S804 from the NDP frame received in S802. When it is determined in S803 that the NDPA frame is not a frame addressed to the STA's own device, the process ends. In S805, a trigger frame that provides an instruction to transmit the estimated CSI is received. If a trigger frame is received in S804, when CSI estimated from the NDP frame in S805 is transmitted in S806 to the AP that has transmitted the NDPA frame, the process ends. Incidentally, in the present embodiment, only in the case where identification information included in an NDPA frame matches information of the STA's own device, CSI is estimated. However, the communication device that has received an NDP frame may estimate CSI and may transmit the CSI when it is determined, from identification information in a trigger frame, that the trigger frame is addressed to itself.

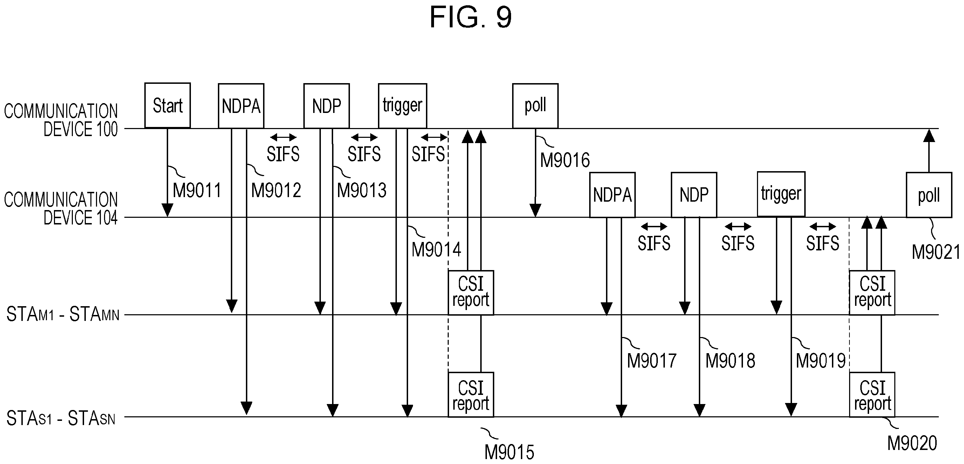

Fig. 9 illustrates a sequence in which the communication device 100, which is the master AP, and the communication device 104, which is a slave AP, acquire CSI from an STA that is establishing a connection with the communication device 100 and an STA that is establishing a connection with the communication device 104. STA_{M1} to STA_{MN} refer to STAs that are establishing a connection with the communication device 100. STA_{S1} to STA_{SN} refer to STAs that are establishing a connection with the communication device 104.

In M9011, the communication device 100 transmits, to the communication device 104, a start frame for starting to acquire CSI. Subsequently, in M9012, the communication device 100 transmits an NDPA frame to the STA_{M1} to STA_{MN} and the STA_{S1} to STA_{SN}. In the present embodiment, in the NDPA frame, in addition to an AID, a BSSID or MAC address is included.

When only a time period of an SIFS (Short InterFrame Space) has elapsed since transmission of the NDPA frame, the communication device 100, which is the master AP, transmits an NDP frame (M9013). The NDP frame is a frame transmitted so that an STA that receives the NDP frame measures reception strength of the NDP frame and compares the reception strength with transmission power included in the NDP frame to thereby estimate CSI.

When the SIFS has elapsed since transmission of the NDP frame, the communication device 100 transmits a trigger frame to the STA_{M1} to STA_{MN} and the STA_{S1} to STA_{SN} (M9014). The trigger frame is transmitted to provide an instruction to transmit, to the communication device 100, CSI estimated by an STA from the NDP frame. An STA that has received the trigger frame transmits CSI to the communication device 100 (M9015) when an AID 306 field and a BSSID 307 field in the NDPA frame match an AID of its own device and a BSSID of a network in which its own device participates. If the NDPA frame received by the STA is the frame illustrated in Fig. 4, the STA transmits CSI to the communication device 100 when an AID 406 field and a MAC address 407 field match the AID of its own device and a MAC address of its own device. In place of a BSSID or MAC address, an ID of a slave AP or a BSS color may be used. For example, an ID unique to an individual communication device is assigned to slave APs in advance, and a determination is made, in accordance with an ID of a slave AP that is establishing a connection with an STA, and an AID, as to whether or not to transmit a CSI report.

After the communication device 100 receives CSI reports from the STAs, the communication device 100 transmits a polling signal to the communication device 104 in M9016. When the communication device 100 transmits a polling signal, a transmission right to transmit an NDPA frame is given to the communication device 104. That is, it can be said that the polling signal here is an instruction to cause the communication device 104 to transmit an NDPA frame. After receiving the polling signal, the communication device 104 performs M9017 to M9021 as in M9012 to M9016.

If there are slave APs except the communication device 104, the master AP transmits a polling signal to each slave AP in turn, and CSI reports are acquired by using a similar procedure.

In the present embodiment, even if there are STAs whose AIDs are the same, the communication device 100, which is the master AP, can acquire channel information from an appropriate device. Furthermore, the master AP can acquire channel information from a slave AP or an STA by performing appropriate sounding, thus making it possible to acquire information necessary to perform coordinated operation by using distributed MIMO.

In the present embodiment, although the example has been described in which the master AP acquires CSI from an STA that is establishing a connection with the master AP and an STA that is establishing a connection with a slave AP, the master AP may transmit an NDPA frame to the slave AP to acquire CSI from the slave AP. For example, the master AP determines, in accordance with the acquired CSI information of the slave AP, that the slave AP is not able to function as an AP, and can perform control so that data is not transmitted to the slave AP that has not functioned as an AP.

Incidentally, a recording medium recording program code of software that implements the above-described functions may be supplied to a system or device, and a computer (CPU or MPU) of the system or device may read and execute the program code stored in the recording medium. In this case, the program code itself read from the storage medium implements the functions according to the embodiment described above, and the storage medium storing the program code constitutes the above-described device.

Examples of a storage medium that can be used for supplying the program code include a flexible disk, a hard disk, an optical disc, a magneto-optical disk, a CD-ROM, a CD-R, a magnetic tape, a non-volatile memory card, a ROM, and a DVD.

Furthermore, the above-described functions may be implemented not only when the computer executes the read program code, but also when an OS running on the computer performs some or all of actual processes in accordance with an instruction of the program code. OS stands for Operating System.

Furthermore, the program code read from the storage medium is written into a memory included in an expansion board inserted into the computer or included in an expansion unit connected to the computer.

Subsequently, a CPU included in the expansion board or expansion unit may perform some or all of actual processes in accordance with an instruction of the program code to implement the above-described functions.

The present invention can also be implemented by a process in which a program that implements one or more functions according to the embodiment described above is supplied to a system or device via a network or storage medium and in which one or more processors in a computer of the system or device read and execute the program. Furthermore, the present invention can also be implemented by a circuit (for example, an ASIC) that implements one or more functions.

The present invention is not limited to the above-described embodiment, and various changes and modifications can be made without departing from the spirit and scope of the present invention. Accordingly, the following claims are appended to disclose the scope of the present invention.

This application claims the benefit of Japanese Patent Application No. 2020-147489, filed September 2, 2020, which is hereby incorporated by reference herein in its entirety.

## Claims

1. A communication device comprising:
a transmission unit configured to transmit a first frame being a frame to be transmitted toward a plurality of communication networks and to be transmitted so that the communication device receives information on a channel state from a plurality of other communication devices, the first frame including at least sets of AIDs (Association IDs) of the respective plurality of other communication devices configured to transmit the information on the channel state and pieces of identification information of communication networks to which the other communication devices belong, or at least sets of AIDs of the respective plurality of other communication devices configured to transmit the information on the channel state and MAC addresses of the respective plurality of other communication devices; and
a reception unit configured to receive the channel state from the plurality of other communication devices that have received the first frame transmitted by the transmission unit.

2. The communication device according to Claim 1, wherein the communication device is an access point constructing a communication network.

3. The communication device according to Claim 1 or 2, further comprising a control unit configured to control another access point constructing at least one communication network of the plurality of communication networks.

4. The communication device according to Claim 3, wherein the control unit provides an instruction to cause the other access point to transmit a second frame.

5. The communication device according to Claim 4, wherein the second frame is an NDPA (Null Data Packet Announcement) frame complying with an IEEE 802.11 series standard.

6. The communication device according to any one of Claims 1 to 5, wherein the first frame is an NDPA (Null Data Packet Announcement) frame or trigger frame complying with an IEEE 802.11 series standard.

7. A communication device comprising:
a first reception unit configured to receive a first frame being a frame to be transmitted from another communication device toward a plurality of communication networks and to be transmitted so that the other communication device receives information on a channel state from a plurality of devices, the first frame including at least sets of AIDs (Association IDs) of the respective plurality of devices configured to transmit the information on the channel state and pieces of identification information of communication networks to which the devices belong, or at least sets of AIDs of the respective plurality of other communication devices configured to transmit the information on the channel state and MAC addresses of the respective plurality of other devices; and
a transmission unit configured to transmit the information on the channel state to the other communication device in accordance with a set of an AID and the identification information included in the first frame received by the first reception unit, or a set of an AID and a MAC address included in the first frame.

8. The communication device according to Claim 7, further comprising:
a second reception unit configured to receive a second frame used for estimating the channel state; and
an estimation unit configured to estimate the channel state in accordance with the second frame received by the second reception unit,
wherein the transmission unit transmits information on the channel state estimated by the estimation unit to the other communication device.

9. The communication device according to Claim 8, wherein the second frame is an NDP (Null Data Packe) frame complying with an IEEE 802.11 series standard.

10. The communication device according to any one of Claims 1 to 9, wherein each piece of identification information is a BSSID (Basic Service Set ID).

11. The communication device according to any one of Claims 1 to 10, wherein the first frame is an NDPA (Null Data Packet Announcement) frame or trigger frame complying with an IEEE 802.11 series standard.

12. The communication device according to any one of Claims 1 to 11, wherein the information on the channel state is CSI (Channel State Information).

13. The communication device according to any one of Claims 1 to 12, wherein the communication device operates in compliance with an IEEE 802.11be standard.

14. A communication method comprising:
a transmission step of transmitting a frame to be transmitted from a first communication device toward a plurality of communication networks and to be transmitted so that the first communication device receives information on a channel state from a plurality of second communication devices, the frame including at least sets of AIDs (Association IDs) of the respective plurality of second communication devices configured to transmit the information on the channel state and pieces of identification information of communication networks to which the second communication devices belong, or at least sets of AIDs of the respective plurality of second communication devices configured to transmit the information on the channel state and MAC addresses of the respective plurality of second communication devices; and
a reception step of, with the first communication device, receiving the channel state from the plurality of second communication devices that have received the frame transmitted in the transmission step.

15. A program for causing a computer to function as each unit of the communication device according to any one of Claims 1 to 13.
